# NEW EUROPEAN PATENT SPECIFICATION

(11) **EP 0 303 325 B2**
(45) Date of publication and mention of the opposition decision: **07.04.1999**
(45) Mention of the grant of the patent: 08.12.1993
(21) Application number: 88201703.1
(22) Date of filing: 09.08.1988
(51) Int. Cl.: A01C 17/00

(54) **A machine for spreading material**
Streuer
Epandeur

(30) Priority: 10.08.1987 NL 8701870
(43) Date of publication of application: 15.02.1989
(73) Proprietor: MAASLAND N.V., 3155 PD Maasland (NL)
(72) Inventor: Van der Lely, Cornelis, CH-Zug (CH)
(74) Representative: Corten, Maurice Jean F.M.

(56) References cited:
- EP-A- 0 197 288
- EP-A- 0 251 401
- EP-A- 0 289 095
- EP-A- 0 300 580
- WO-A-86/02727
- DE-A- 1 457 863
- DE-A- 1 936 568
- DE-A- 2 901 767
- DE-A- 3 033 666
- DE-A- 3 427 367
- DE-A- 3 504 894
- DE-C- 2 463 387
- FR-A- 2 571 209
- GB-A- 2 058 533
- US-A- 4 376 298

## Description

The invention relates to a machine for spreading material, in particular granular and/or pulverulent material such as fertilizer, which machine comprises a frame, a hopper, at least one spreading member and a measuring device, the measuring device provides an indication of the spreading of the material by the spreading member.

A machine of this kind is known from GB-A-2 058 533. In this known construction at a distance from the spreading member measuring means are provided to obtain an indication about the width over which the material is spread during operation. Further the measuring means provide an indication of the rate of distribution of material in relation to the distance of spread and the width over which the material is spread during travel of the device.

The FR-A-2 571 209 relates to a machine for spreading material. This known machine comprises mechanisms to adjust the spreading width and the quantity of material to be spread over a unity of surface.

It is an object of the invention to provide a machine of the above type, by means of which the spread of material can be controlled in an advantageous manner.

According to the invention, the measuring device can measure the distribution of the material through the spread pattern over which it is spread by the spreading member, the measuring device comprising sensors which are responsive to sound waves or light waves the measuring device being coupled with a display device and the results of the measurement can visibly display the distribution of the material over the spread pattern on the display device, wherein the indication in the display device is a graphical one.

Using the machine according to the invention, the material can be fed to the spreading member with such a distribution that the distribution through the spread pattern whereover the material is spread by the spreading member can be controlled. This is e.g. of particular importance when the quantity of material which is spread by unit of time can be adjusted. Further it is of importance when the spreading member is optionally adjustable to one of at least two different positions relative to the surface area to be spread, there being enclosed in the one position a wider angle with the said surface area than in the other position. For example, in the one position, the spreading member may be arranged parallel to the surface area to be spread, i.e. enclose an angle of 0° with the said surface area, and in the other position it may enclose an angle of some degrees, e.g. 5°, therewith. In this situation, in the one position the material will land on the surface at least approximately in accordance with a section of a circle around the rotational axis of the spreading member and in the other position in accordance with a section of an ellipse. The distribution of the material through the spread pattern can then be measured and be adapted thereto.

Thus, the driver of the machine can advantageously check the spread of the material during operation. If necessary, the driver can adjust the setting of the machine on the basis of the data available. Thus, in dependence on the data displayed on the display device, the operator can adjust from his seat e.g. the working width whereover the material is spread by the machine and/or check and, if necessary, adjust the quantity of material spread per hectare. Also, it can be checked whether the material is distributed uniformly and, if so desired, is spread appropriately on either side of the machine. When the display device is provided with an automatic control for setting the various values, it can be checked thereon whether all this is effected as required and no disturbances occur. When the display device does not operate an automatic control, the driver can adjust manually the various control members of the machine in dependence on the indications displayed on the display device, so that the material can be spread according to the requirements.

In accordance with an advantageous embodiment of the machine according to the invention, the measuring device provides a number of measuring members devided around at least a part of the spreading member.

A favourable construction of the machine according to the invention is obtained when near the spreading member periphery there are arranged measuring members, the arrangement of which being such that the said measuring members furnish an indication as to the direction of spread wherein the material is spread by the spreading member.

In a further construction of the machine according to the invention the spreading member is coupled to an adjusting mechanism for optionally setting one of at least two different speeds of the spreading member, and that there is provided a measuring member for measuring the number of revolutions of the spreading member, the measuring results of which measuring member being conveyed to the display device, and that a calculating unit of the display device produces thereof together with other measuring data as a result a visible display as to the quantity of material spread per unit of surface e.g. in kilogrammes per hectare.

According to a further embodiment of the invention, the machine includes means for influencing the spread pattern in such a manner that the machine produces a satisfactory spread pattern.

An advantageous embodiment of the machine according to the invention is obtained when the distribution of the feed of material to the spread pattern is adjustable in at least two different positions, so that in the one position there is fed relative more material in the centre of the spread pattern than near the two edges thereof, while in the other position there is fed relative less material to the centre of the spread pattern than near the edges thereof.

In a further embodiment of the machine according to the invention, the distribution of the material over the spread pattern is adjustable by a discharge member and further members which discharge member and further members cooperate with each other and through which the material is fed to the spreading member, the discharge member and/or the further members are adjustable relative to the position of the spreading member and/or relative to each other. Acting thus, the feed of the material to the spreading member can be easily distributed, so that also the distribution of the material spread through the spread pattern, and hence over the spread width, can be adjusted.

In accordance with a further embodiment of the machine according to the invention, the discharge member and the further members are adjustable around the axis of rotation of a rotatable spreading member.

An easily operable machine is obtained in accordance with a further embodiment of the machine when the discharge member and the further members each are provided with a number of apertures of different size, which apertures cooperate with each other and can be adjusted relative to each other through the intermediary of the adjusting members to be able to adjust the distribution of the feed of material over the area of the spreading member to which the material is fed to the same.

In accordance with a further embodiment of the machine according to the invention, the quantity of material to be fed per unit of time to the spreading member can be controlled advantageously when at least one of the further members is adjustable relative to the discharge member to adjust the feed of the material to the spreading member per unit of time to a greater or lesser extent.

For a better understanding of the invention and to show how the same may be carried into effect, reference will now be made, by way of example, to the accompanying drawings of an advantageous embodiment, in which:
Figure 1 is a side view of a machine according to the invention coupled to a tractor;
Figure 2 is, to an enlarged scale, a plan view of part of the machine of Figure 1, taken on the line II-II in Figure 3;
Figure 3 is, to an enlarged scale, a vertical cross-sectional view of part of the machine, taken on the line III-III in Figure 2;
Figure 4 is, to an enlarged scale, a plan view of several components located in the machine one below the other in a position wherein they are shifted relative to each other in the horizontal direction;
Figure 5 is a schematic plan view of part of the machine;
Figure 6 is a schematic plan view of a position of the outflow apertures of the hopper;
Figure 7 is a schematic plan view of a sector-shaped spread pattern associated with Figure 6;
Figure 8 is a schematic plan view of a different position of the outflow apertures, and
Figure 9 is a plan view of a spread pattern associated with Figure 8.

The machine according to the invention and as shown in the drawings comprises a frame 1 provided with coupling members 2, by means of which the machine can be coupled to the lifting hitch 3 of a tractor 4 or a suchlike vehicle. The coupling members 2 are arranged on a trestle 6 which, when the machine is in the horizontal position, extends vertically and is connected to the front side of the frame 1. The frame 1 includes two carrier beams 5 which are connected at equal height and parallel to each other to the upper side of the trestle 6. Relative to the direction of operative travel 7 of the machine, the carrier beams 5 extend from the trestle 6 towards the rear.

The machine includes a hopper 8 to which is fitted a carrier bracket 9. Seen in plan view, the carrier bracket 9 is U-shaped and comprises parallel parts that are located above the carrier beams 5. The carrier bracket 9 bears on the upper side of the trestle 6 and on the carrier beams 5 by means of three weighing boxes 10 together constituting a weighing device.

The machine furthermore includes a spreading member 13 located under the hopper 8. The spreading member 13 is rotatable about a rotational axis 14. The rotational axis 14 extends upwardly and, in the horizontal position of the machine, vertically. In this embodiment, the rotational axis 14 preferably coincides with the vertical centre line of the hopper 8. The spreading member 13 is connected to an axle 15 which is supported rotatably in a bearing 16. The spreading member 13 and the axle 15 are also movable to some extent in the upward direction, parallel to the rotational axis 14, relative to the bearing 16. The spreading member 13 is influenced by double dish springs 17 which are arranged at the lower side of the axle 15 in a manner not shown in further detail, the arrangement being such that the said double dish springs tend to move the spreading member 13 downwardly towards the bearing 16. The bearing 16 is arranged between two parallel frame beams 18 which are connected to the frame 1 by means of supports 21.

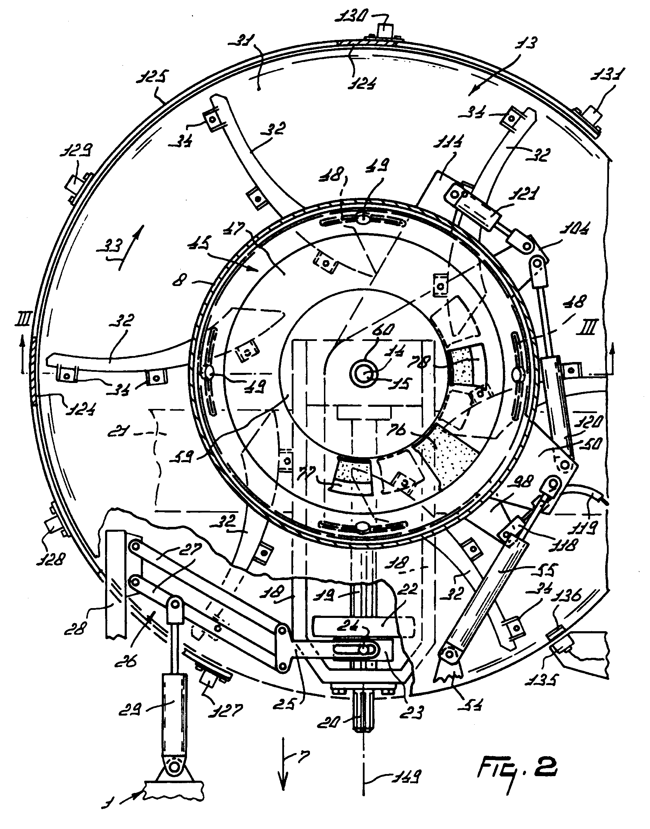

Between the frame beams 18 and parallel thereto there is accommodated a drive shaft 19, one end of which is supported in the bearing 16. The other end of the drive shaft 19 projects to in front of a component part interconnecting the front ends of the frame beams 18, in which component part it is supported. At its front end, the drive shaft 19 is fitted with a coupling end 20 having spines. On the drive shaft 19 there is provided a friction wheel 22, which friction wheel 22 is movable in the longitudinal direction of the drive shaft 19 but is connected thereto rigid against rotation. About a hub which laterally projects beyond the friction wheel 22 and is rigidly connected thereto there is provided rotatably a bushing 23. The bushing 23 is provided with two diametrically opposite pins 24. The pins 24 are accommodated in slotted holes of a fork 25 constituting part of an adjusting mechanism 26 for the friction wheel 22. The adjusting mechanism 26 comprises two parallel arms 27 which are coupled pivotably to the fork 25 as well as to a frame support 28. Together with the frame support 28 and the fork 25, the arms 27 constitute a parallelogram-shaped adjusting arm for the friction wheel 22. To one of the arms 27 there is connected an adjusting member 29, in this embodiment a hydraulic one. One end of the adjusting member 29 is coupled pivotably to an arm 27 and the other end is coupled pivotably to the frame 1 (Figure 2), the arrangement not being shown in further detail.

The spreading member 13 includes a spreader plate 31 on whose upper side there are arranged thrower blades 32, in this embodiment six. Seen in plan view, the thrower blades 32 are of a curved shape. Relative to the normal direction of rotation 33 of the spreading member, the inner ends of the thrower blades 32 are located in a more forward position than the outer ends thereof. As is apparent in particular from Figure 2, the ends of the thrower blades 32 are arranged such that they are approximately in touch with a radian through the axis of rotation 14. The thrower blades 32 are of a through-shaped cross-section and have their open sides face the direction of rotation 33. Near their rear sides, the thrower blades 32 are provided with connecting supports 34, by means of which they are bolted to the spreader plate 13. Taken in a direction parallel to the spreader plate 31 and perpendicular to the axis of rotation 14, the upper side of each of the identical thrower blades 32 extends in accordance with an oblique inner edge 35 and an oppositely oblique upper edge 36. The point of intersection between the inner edge 35 and the upper edge 36 constitutes the highest point of a thrower blade 32. In this point, the thrower blades 32 have a height 37 which is more than twice the height 38 at the ends that are remote from the axis of rotation 14. On the centre portion of the spreader plate 31 within the thrower blades 32 there is provided a stiffening plate 39. Seen in plan view, this stiffening plate 39 is circular in shape, as is also the spreader plate 31, and it has its outer circumference located near the thrower blade ends that are nearest to the axis of rotation 14. By means of bolts 41, the spreading member 13 is coupled rigidly to a coupling plate 40 which is connected rigidly to the axle 15.

The lower end of the hopper includes a discharge member 45. The discharge member 45 is dish-shaped and has a bottom 46 and an obliquely upwardly diverging wall 47. The wall 47 is shaped in accordance with a conical plane. The bottom 46 is circular and, in this embodiment, extends perpendicularly to the axis of rotation 14. Near the upper edge of the wall 47 there are provided four slotted apertures 48. Through the slotted apertures 48 there are inserted bolts 49, by means of which bolts 49 the discharge member 45 is coupled to the further portion of the hopper 8. The discharge member 45 is movable relative to the lower end of the further portion of the hopper 8 about the axis of rotation 14. The extent of movement of the discharge member 45 about the axis of rotation 14 is determined by the length of the slotted apertures 48. In this embodiment, the discharge member 45 is movable through approximately 30° about the axis of rotation 14. Near the upper edge of its wall 47, the discharge member 45 is fitted with an adjusting arm 50 having three apertures 51, 52 and 53. In the aperture 52, the arm 50 is coupled pivotably to an adjusting member 55 which, in this embodiment, is a hydraulic one. Moreover, the adjusting member 55 is connected pivotably to a support 54 which is connected rigidly to the frame in a manner not shown in further detail.

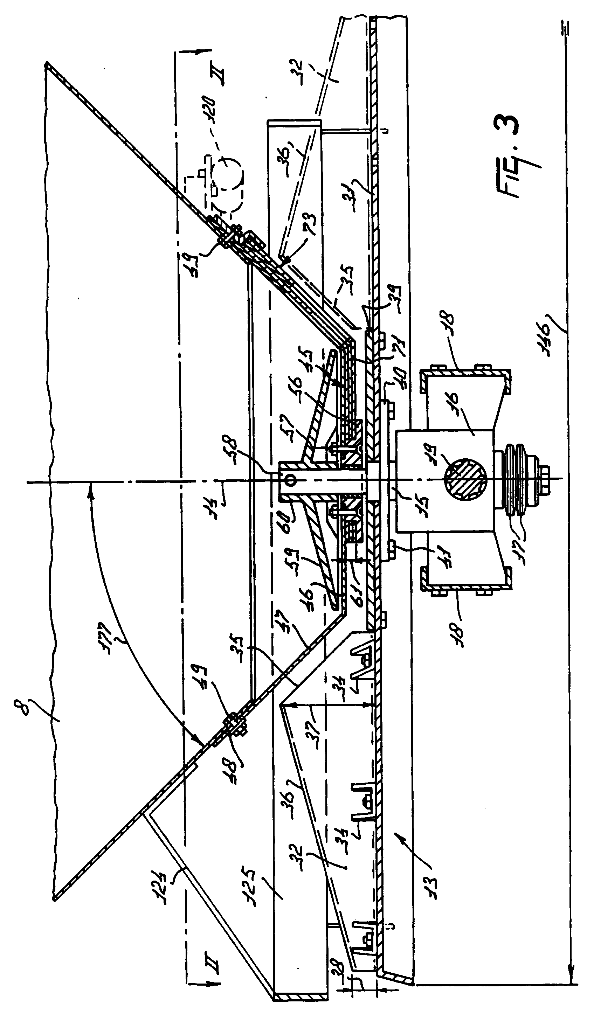

To the lower side of the bottom 46 there is bolted by means of bolts 57 a carrier ring 56 (Figure 3). The upper end 58 of the axle 15 is inserted through the carrier ring 56 and through the bottom 46 and reaches to into the lower end of the hopper 8. To the upper end 58 reaching into the hopper 8 there is attached a conveyor disc 59, which conveyor disc 59 is of a conical shape and extends obliquely downwardly from the hub 60 arranged around the upper end 58. The diameter of the disc 59 is almost of the same size as that of the bottom 46. The circumference of the conveyor disc 59 is located at only a slight distance above the bottom 46. The disc 59 is of such a shape that. from the hub 60, it is inclined obliquely downwardly through an angle of approximately 10° relative to a plane perpendicular to the axis of rotation 14. Preferably, this angle does not exceed 20° and is not less than 5°.

Between the bottom 46 of the discharge member 45 and a turned-over edge at the lower side of the carrier ring 56 there is formed a groove 61 wherein a plurality of members are supported rotatably about the axis of rotation 14. In this situation, these members bear on the turned-over edge at the lower side of the carrier ring 56 and are rotatable about the centre portion thereof, through which centre portion the bolts 57 extend. Against the side which, taken in a direction from the inside of the hopper 8, is the outer side of the discharge member 45 there is provided an adjusting member 64. The adjusting member 64 comprises a bottom portion 65 located rotatably in the groove 61 and a wall portion 66 that is of an identical shape as the wall portion 47. However, the bottom 65 and the wall portion 66 extend only through an angle of approximately 145° around the axis of rotation 14. In comparison with the dish-shaped discharge member 45, the adjusting member 64 only constitutes a part of a dish-shaped member. Against the lower side of the adjusting member 64 there is provided a doser member 67. The doser member 67 is of a substantially identical shape as the adjusting member 64 and comprises a bottom portion 68 and a wall portion 69. The bottom portion 68 is provided rotatably in the groove 61 under the bottom 65. Against the outer side of the doser member 67 remote from the hopper 8 there is arranged a control member 70 comprising a bottom 71 and a wall 72. In a similar manner as the members 64 and 67, the control member 70 constitutes a member which corresponds to a part of a dish-shaped member, such as the discharge member 45. By means of the upper side of its wall portion 72, the control member 70 extends through approximately 180° around the axis of rotation 14. The members 45, 64, 67 and 70 are rotatable about the axis of rotation 14 relative to each other as well as collectively so.

The discharge member 45 includes three discharge apertures 76, 77 and 78. These apertures are provided in the wall 47. The lower edges of the apertures 76, 77 and 78 are near the bottom 46. The apertures 76 to 78 extend through an angle 79 around the axis of rotation 14. In this embodiment, the angle 79 is approximately 120°. Each of the three apertures 76 to 78 extends through an angle 80 around the axis of rotation 14. In this embodiment, the identical angle 80 for each aperture is approximately 20°. The apertures 76 to 78 are positioned equidistantly relative to each other through an angle 83 of approximately 30°. The two outermost apertures 77 and 78 of the three are identical and, seen in plan view, extend in the radial direction through a height 81. Seen in plan view, the central aperture 76 of the three extends through a radial distance 82 which exceeds the distance 81. In this embodiment, the height 82 of the aperture 76 is slightly more than 1.5 times the height 81 of the apertures 77 and 78. In this embodiment, the apertures 76 to 78 are formed such that, seen in plan view, two facing sides extend radially relative to the axis of rotation 14, whilst the other two facing sides are folded centrically therearound. If so desired, the shape of the apertures may also be chosen differently.

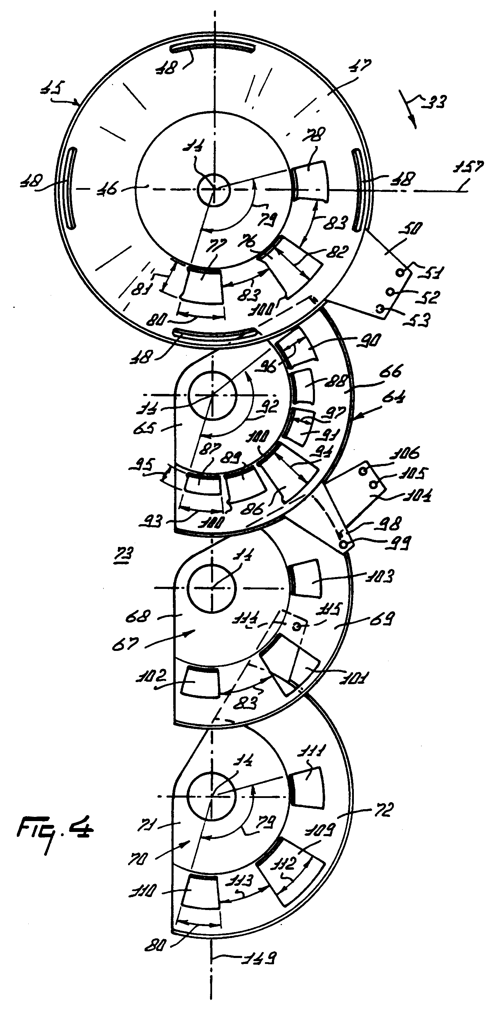

The adjusting member 64 includes six adjusting apertures 86 to 91 which extend through an angle 92 of approximately 150° around the axis of rotation 14. Each of the adjusting apertures 86 to 91 extends through an angle 93 of approximately 20° around the axis of rotation 14. In this connection, each of the apertures 86 to 91 extends around the axis of rotation 14 through an angle 93 which is identical to the angle 80 through which each of the apertures 76 to 78 extends. Seen in plan view and measured radially, the aperture 86 has a height 94 which is identical to the height 82 of the aperture 76. Taken in plan view and parallel to the axis of rotation 14, the apertures 87 and 88 extend through equal heights 95. The height 95 is approximately equal to one third of the height 94. The apertures 87 and 88 are located on either side of the aperture 86 and these three apertures 86 to 88 are grouped around the axis 14 in the same manner as the apertures 76 to 78. The apertures 89 and 90 have equal heights 96, while the aperture 91 has a height 97 which is slightly more than the height 95 of the apertures 87 and 88 and slightly less than the height 96 of the apertures 89 and 90. The height 96 is equal to the height 81 of the apertures 77 and 78, while the height 94 is approximately equal to 1.5 times the height 96. Together with the apertures 89 and 90, the aperture 91 is grouped around the axis of rotation 14 in the same manner as the apertures 76 to 78. The aperture 89 is located between the apertures 86 and 87, while the aperture 91 is located between the apertures 88 and 88. The aperture 90 is situated, relative to the aperture 88, at the side which is remote from the aperture 91. The wall 66 extends around the axis of rotation 14 through a distance which is only slightly more than the size of the angle 92, as is apparent in particular from Figure 4. At the upper side of its wall 66, the adjusting member 64 comprises an adjusting arm 98 having an aperture 99 in the end thereof. The discharge apertures 76 to 78 and the adjusting apertures 86 to 90 are provided with projecting pointed portions 100 at their leading sides relative to the direction of rotation 33.

In its wall portion 69, the doser member 67 has three doser apertures 101, 102 and 103 which are grouped around the axis of rotation 14 in the same manner as the apertures 76 to 78 in the discharge member 45. Each of the apertures 101 to 103 extends around the axis of rotation 14 through an angle which is identical to the angle 80. The apertures 101 to 103 are interspaced around the axis of rotation 14 through an angle that is equal to the angle 83 between the apertures 76 to 78. At the upper side of its wall 69, the doser member 67 is provided with an adjusting arm 104 having two apertures 105 and 106.

The control member 70 is provided with three control apertures 109, 110 and 111 which are grouped around the axis of rotation 14 in the same manner as the apertures 76 to 78 in the discharge member 45. The apertures 109 to 111 extend through an angle 79 of approximately 120° around the axis of rotation 14. The control aperture 109 extends around the axis of rotation 14 through an angle 112 which exceeds the angle 80 and, in this embodiment, is approximately 25°. Consequently, the angle 112 is 5° wider than the angle 80 through which the discharge aperture 76 extends around the axis of rotation 14. The apertures 110 and 111 extend around the axis of rotation 14 through angles which are equal to the angle 80 and, therefore, are denoted by this reference numeral. The angles between the apertures 109, 110 and 109, 111, respectively, are identical. In this connection, relative to the aperture 109, the apertures 110 and 111 are rotated around the axis of rotation 14 through angles 113 of approximately 27.5°. Alternatively, the size of the angle 112 and hence that of the angles 113 can be chosen differently, the angle 79 remaining the same. Near a terminal edge at the upper side of its wall 72, the control member 70 is provided with an adjusting arm 114 having an aperture 115 in the end thereof. As regards size, the members 64 and 67 are substantially identical. The control member 70 extends around the axis of rotation 14 through a slightly wider angle than the members 64 and 67, the arrangement being such as is apparent in particular from Figure 4.

The members 45, 64, 67 and 70 are inter-coupled by adjusting members, as is shown in particular in Figure 2. By means of an adjusting member 118, the adjusting arm 50 of the discharge member 45 is coupled to the adjusting arm 98 of the adjusting member 64. In this embodiment, the adjusting member 118 is constituted by a Bowden cable construction, the end of the adjusting member being connected pivotably near the flexible portion 119 of this Bowden cable construction to the adjusting arm 50 of the discharge member 45 via the aperture 53. The adjusting arm 50 of the discharge member 45 is coupled to the adjusting arm 104 of the doser member 67 by means of an adjusting member 120. In this embodiment, the adjusting member 120 is a hydraulic one having a double-acting cylinder. The adjusting member 120 is coupled pivotably to the adjusting arm 50 in the aperture 51. The other end of the adjusting member 120 is coupled pivotably to the adjusting arm 104 in the aperture 105 thereof. By means of an adjusting member 121, the doser member 67 is coupled to the control member 70. The adjusting member 121 is arranged between the arm 104 of the doser member 67 and the adjusting arm 114 of the control member 70. In this embodiment, the adjusting member 121 is a hydraulic one having a double-acting cylinder. The adjusting member 121 is coupled pivotably to the adjusting arm 104 in the aperture 106 thereof and to the adjusting arm 114 in the aperture 115 thereof.

To the hopper 8 there is connected a bracket 125 by means of one or more supports 124. The bracket 125 is positioned centrically around the axis of rotation 14 and extends through an angle 126 of more than 180° therearound. In this embodiment, the angle 126 is equal to approximately 200° (Figure 5). On the bracket 125 there are mounted five measuring members constituted by sensors 127 to 131, of which sensors the sensors 127 and 131 are located near the ends of the bracket 125. The sensor 129 is located in the midway point of the bracket, while the two other sensors 128 and 130 are positioned approximately halfway between the sensors 129, 127 and 129, 131, respectively. The sensors 127 to 131 are coupled to a display device 133 via a cable 132. The bracket 125 is arranged at such a distance from the axis of rotation 14 that, seen in plan view and parallel to the axis of rotation 14, it is located just outside the periphery of the spreading member 13. The sensors 127 to 131 may be of any desired type suitable for measuring the passage of the material spread. For example, the passage of material can be measured by elements of the sensors which are responsive to sound waves or light waves. Alternatively, the elements may also be elements which perform measurements on contact with material spread. By means of sound or via circuits, the elements, when contacted by material spread, can convey their measuring result to further portions of the sensors. In this embodiment, the sensors 127 to 131 have elements which extend downwardly from the bracket 125. These elements extend at least such that they reach to below the plane wherein the material is spread by the spreading member 13 during operation. For that reason, the sensors will preferably reach to below a plane which includes the upper side of the spreader plate 31 of the spreading member 13

Near its circumference, the spreading member 13 is provided with an indication member 136 which co-operates with a sensor 135 which is in a fixed position relative to the frame of the implement. Via a cable 137, the sensor 135 is connected to the display device 133.

Via cables 138, the weighing boxes 10 are also connected to the display device 133. By means of a line system 139, the display device 133 is connected to the hydraulic adjusting members 55, 120 and 121. The control member 159 of the Bowden cable constuction 119 of the adjusting member 118 is also connected to the display device 133. The line system 139 furthermore includes a line connected to the adjusting member 29 of the adjusting mechanism 26. The connections of the lines 139 to the hydraulic double-acting adjusting members is not shown in further detail.

At its upper side, the hopper 8 is provided with a support 143 to which is connected a pointer 141 by means of a horizontal pivot pin 142 extending transversely to the direction of operative travel 7. The pointer 141, which is suspended freely from the pivot pin 142, reaches by means of its lower end to near a strip-shaped member 144 which is provided with a scale 145.

In this embodiment, the spreading member 13 has a diameter 146 of approximately 100 cms. Preferably, the diameter 146 is not less than 70 cms and not more than 150 cms.

During operation, the machine is moved relative to the surface area to be spread, while the spreading member is caused to rotate about the axis of rotation 14. The machine according to the invention is in particular intended for spreading granular and/or pulverulent material, such as fertilizer, over the field. The material to be spread is supplied from the hopper 8 to the spreading member 13 and spread over a wide strip during the movement of the machine in the direction 7 over the surface area to be spread. Prior to usage, the machine is coupled to the lifting hitch 3 of a tractor 4 or a suchlike vehicle with the aid of the coupling members 2. The drive shaft 19 is coupled via its leading end 20 to the power take-off shaft 148 of the tractor by means of an intermediate shaft 147. The hopper 8 is filled with the material to be spread. The members 45, 64, 67 and 70 together constituting a discharge mechanism 73 are adjusted such that the material can flow from the hopper 8 through a plurality of apertures in each of the members and be fed to the spreading member. During travel in the direction 7, the spreading member 13 is caused to rotate about the axis of rotation 14 in the direction indicated by the arrow 33. Then, the material is spread by the spreading member over a sector-shaped spread pattern around the axis of rotation. During normal operation, this sector-shaped spread pattern is usually directed rearwardly relative to the direction of operative travel 7, i.e. the spread pattern is located such that the material is spread to both sides of the implement, the arrangement being such that the material is spread equally far to either side of a centre plane 149 which includes the axis of rotation 14 and is located parallel to the direction of operative travel 7. In dependence on the type of material used, the size of the spread pattern around the axis of rotation 14 is determined mainly by the manner of feeding of the material to the spreading member, the shape of the spreading member and its speed of rotation. The machine according to the invention is of such a design that the spread sector over which the material is spread constitutes a spread pattern 150 whose boundary lines 151 and 152 are located at least substantially perpendicularly to the centre plane 149, the arrangement being such as has been shown in Figure 5. Then, the material will leave the circumference of the spreading member 13 through an angle 153 of approximately 180° around the axis of rotation 14, i.e. within the spread points 154 and 155. In these points 154 and 155, the boundary lines 151 and 152 of the spread pattern 150 are contiguous. The boundary lines 151 and 152 then constitute a starting spread line and a final one, along which the material is spread by the spreading member 13 in the various directions within the sector 153.

Apart from the type of material used, the distance through which the material is spread by the spreading member 13 mainly depends on the rotational speed thereof. In order to be able to control the distance through which the material is spread by the spreading member and hence the spread width, it is possible to control the rotational speed of the spreading member. To that end, the spreading member 13 is driven via the friction wheel 22 which bears with pressure against its bottom side. In order to prevent slippage and to provide a proper contact between the friction wheel and its bottom side, the spreading member 13 slightly springs relative to the bearing 16 by means of double dish springs 17. The double dish springs 17 are of such a design that they will retain the bottom side of the spreading member 13 with some pressure against the circumference of the friction wheel. The friction wheel 22 can be moved along the drive shaft 19 towards the axis of rotation 14 and away therefrom, respectively, by means of the adjusting mechanism 26. By positioning the frictional wheel closer to the axis of rotation 14, the rotational speed of the spreading member 13 can be increased. Inversely, the rotational speed of the spreading member 13 can be decreased. In this embodiment, at a drive rate of the power take-off shaft of the tractor and hence of the drive shaft 19 of approximately 540 revs/min, the rotational speed of the spreading member 13 can be controlled within the limits of approximately 300 to 600 revs/min. The material can then be spread over an effective spread width of up to 36 metres. In this embodiment, the spreading member 13 is of such a design that the material can be spread over an actual width of approximately 48 metres, i.e. 24 metres on either side of the centre plane 149. The movement of the friction wheel 22 along the drive shaft 19 can be effected advantageously by means of the adjusting member 29 via the adjusting arms 27 constituting a parallelogram construction. Thus, the spread width can be controlled within the maximum spread width of approximately 48 metres. Preferably, the rotational speed being set at a minimum, the spread width can be reduced to approximately 10 metres. Owing to the relatively large diameter 146 of the spreading member, the material can be spread over a large distance from the spreading member with a relatively low rotational speed of the spreading member. Hereby the material delivered from the outlet openings can be picked up smoothly by the spreading member and be moved smoothly to the outer ends of the blades 32 to be spread over the surface. The relatively large diameter 146 is of advantage for a wished regular distribution of the material over the sector 150 in correspondence with the setting of the respective openings in the members 45, 64, 67 and 70.

Preferably, the material is spread in such a manner that in the centre of the spread width there is spread more material per surface unit than in a direction towards the ends thereof. The distribution of the material over the spread width can be influenced by the manner of material supply to the spreading member. In order to be able to control the material distribution over the spread width, there is arranged the adjusting member 64 which is provided with the various apertures 86 to 91.

A spread through the wide spread pattern 150, which is located such that the material is spread equally far to either side of the plane 149 as is shown in Figures 5 to 9, is obtained when the discharge apertures are positioned at least substantially in front of the plane 157 which includes the axis of rotation 14 and extends transversely to the direction of operative travel 7. In addition, the discharge apertures are located advantageously at the side of the centre plane 149 where the spreading member portion is located that substantially moves forwardly with the direction of rotation 33 relative to the direction of operative travel 7. In this embodiment, the discharge apertures 77 and 78 of the discharge member 45 are positioned such that the planes 149 and 157, respectively, extend at least substantially therethrough. The direction of rotation being 33, the discharge aperture 76 is then located in front of the plane 157 and, taken in the direction of operative travel 7, to the left of the plane 149.

In case the direction of rotation of the spreading member 13 should be chosen opposite to the direction of rotation 33 and the curvature and position of the thrower blades 32 be matched thereto, then the discharge apertures 76 to 78 would be in a position rotated through approximately 90° in the direction 33. Seen in Figure 4, this would then mean that the aperture 77 would be located near the plane 157 and the aperture 78 near the plane 149, the position of the aperture 78 being, relative to the direction of operative travel, in front thereof and that of the aperture 77 to the right thereof.

In order to obtain a spread over the wide spread pattern 150 within the boundary lines 151 and 152 located perpendicularly to the centre plane 149, the discharge apertures 76 to 78 are arranged such that they are distributed through approximately 90° or more around the axis of rotation 14. The discharge apertures are positioned eccentrically relative to the axis of rotation 14. In this embodiment, the angle 79 is 120°. In order to obtain such a distribution of the material over the spread width 156 that there is spread more material in the centre than near the ends thereof, in particular when the spreading member 13 is in a horizontal position or in a position wherein it is parallel to the surface to be spread, respectively, a greater quantity of material is fed in the centre of the feed region to the spreading member 13 per unit of time than near the ends thereof. The feed region of the material to the spreading member 13 is determined by the angle 79 through which the supply thereto is effected. In this embodiment wherein the apertures 76 to 78 are positioned above the spreading member 13, the feed region approximately coincides with the angle 79. This in particular because the discharge apertures 76 to 78 are comparatively closely contiguous to the spreading member. In order to be able to obtain the said distribution around the spreading member, the height 82 of the discharge aperture 76 is considerably greater than the height 81 of the discharge apertures 77 and 78. In order to be able to obtain the said distribution of the material through the spread width, the spreading member being in a position parallel to the surface to be spread and the material being spread over an approximately semi-circular spread pattern (Figure 7), the adjusting apertures 86, 87 and 88 are caused to co-operate with the respective discharge apertures 76 to 78. Since the apertures 87 and 88 have a height 95 which is less than the height 81, the passageway of the apertures 77 and 78 is partly blocked by the wall 66. The height 94 of the aperture 86 is equal to the height 82 of the aperture 76. Therefore, the distribution of the feed of the material to the spreading member 13 is mainly determined by the surface areas of the respective apertures 86 to 88.

The size of passage of the apertures 86 to 88 can be varied further in order to control the quantity of material fed per unit of time from the hopper 8 to the spreading member 13. For this purpose there is provided the doser member 67 which is arranged such that the apertures 101 to 103 can be caused to co-operate to a greater or lesser extent with the apertures 76 to 78 and with the adjusting apertures 86 to 88 co-operating therewith, respectively. By rotating the doser member 67 relative to the discharge member 45 and the adjusting member 64, the apertures 101 to 103 can coincide to a greater or lesser extent with the apertures 86 to 88, so that thereby the actual passage size of the apertures to which material is fed to the spreading member can be controlled. Thus, the quantity of material flowing per unit of time from the hopper 8 to the spreading member 13 is controllable.

Usually, the control member 70 is adjusted such relative to the members 45, 64 and 67 that the apertures 109 to 111 are located entirely under the apertures 76 to 78 and the cooperating apertures of the members 64 and 67. The distribution of the material over the feed region on the spreading member can be set to some further extent by the control member 70, as the width 80 of the apertures 110 and 111 is identical to that of the apertures 77 and 78 in the discharge member 45 and of the co-operating apertures in the members 65 and 67 and as the width 112 of the aperture 109 exceeds that of the aperture 76 and of the co-operating apertures in the members 65 and 67. By rotating the control member 70, the control apertures 110 and 111 can be moved partly to a position beside the discharge apertures 77 and 78, so that they are partly closed without the wider control aperture 112 partly closing the discharge aperture 76. Thus it is possible to feed less material per unit of time to the ends of the feed region of the material than in the centre thereof. In other words, a greater quantity of material can be spread per unit of time in the centre of the spread width than near the boundary lines 151 and 152.

The adjustment of the various members of the machine can be effected with the aid of the relevant adjusting members from the control members mounted near the driver's seat of the tractor or of a different type of vehicle to which the machine is coupled.

The machine according to the invention can also be used when it is constructed as a self-propelled vehicle.

In the embodiment wherein the machine can be coupled to a tractor or a suchlike vehicle, the various members are operable by means of control members arranged at a display member. The display member 133 and hence the control members are coupled to the relevant adjusting members via flexible connections. Thus, the display member and the associated control members belong to the machine according to the invention, but they may be mounted at a greater or lesser distance from the frame thereof, e.g. in the cab of a tractor to which the machine is coupled.

The adjustment of the adjusting member 29 for controlling the rotational speed of the spreading member is possible via the control member 169 arranged at the display device 133.

The adjustment of the control member 70 relative to the members 45, 64 and 67 is possible via the adjusting member 121. By means of lines, this adjusting member 121 is coupled to the control member 159 arranged at the display device 133. The adjustment is possible because the adjusting member 121 is connected to the arm 104 of the doser member 67, which arm 104 is maintained in a predetermined position relative to the arm 50 of the discharge member 45.

The doser member 67 can be adjusted for the purpose of quantity control relative to the discharge member 45 by means of the adjusting member 120. This adjusting member 120 is coupled to the control member 161 arranged at the display member 133. The control member 161 is coupled by means of flexible lines to the cylinder of the double-acting hydraulic adjusting member 120. By means of the adjusting member 121, the doser member 67 is coupled to the control member 70. By adjusting the doser member 67, the control member is adjusted simultaneously in the same manner, so that the quantity control relative to the discharge apertures 76 to 78 in the discharge member 45 and relative to the adjusting apertures 86 to 91 in the adjusting member 64 cooperating therewith can be effected simultaneously with the adjustment of the doser member 67. For the purpose of quantity control, the control member 70 thus remains in a fixed position relative to the doser member 67. For a control of the distribution over the working width via the control member 70, the control member 70 is adjusted essentially relative to the doser member 67. During operation, the distribution of the material over the spread pattern 150, and hence over the spread width 156 over which the material is spread, can be measured by the sensors 128, 129 and 130, the spread pattern 150 being located as is shown in Figure 5 and the bounding spread lines 151 and 152 perpendicularly to the plane 149. The sensors 127 and 131 are then outside the spread pattern 150. During spreading of the material, the sensors 128 to 130 will be hit by the grains of material spread by the spreading member. The sensors are designed such that the number of grains hitting these sensors furnish an indication as to the quantity of material spread by the spreading member per unit of time in the region of the sensors. This indication can be conveyed to the display device 133 via the cable system 132. The quantity of material hitting the various sensors 128 to 130 per unit of time provides an indication as to the distribution of the material over the spread pattern 150. The indication of this distribution can be conveyed, e.g. as electric pulses, to the display device 133 via the cable system 132. The display device 133 comprises, for example, an electronic calculator and switching unit processing these data and visibly displaying the distribution over the spread pattern in the window 162, e.g. by the stepped graphic representation as shown in the spread window 162 in Figure 5. When the distribution over the spread pattern or over the spread width, respectively, is not the desired one, this distribution can be adjusted with the aid of the control member 70. For this purpose, the control member 70 can be adjusted via the control member 159 and the adjusting member 121 relative to the doser member 67 and hence relative to the discharge member 45 and the adjusting member 64. If so desired, the configuration and/or construction of the control apertures 109 to 111 can also be chosen differently in order to be able to influence the distribution over the spread pattern in a different manner than is shown in this embodiment.

During operation, the spread width can be checked by measuring the rotational speed of the spreading member, which speed determines the spread width, by means of the sensor 135 from the indication member 136. The indication of this sensor can be conveyed to the display device and via the switching unit be displayed visibly in a window 163. The indication of the spread width can be calibrated in advance for different types of material with respect to the various rotational speeds to be selected for the spreading member. For example, the size of the grains to be spread may influence the distance through which they are spread by the spreading member at a given number of revolutions thereof. This calibration may be inputted by means of keys (not further shown) in the display member 133. Using these keyed-in values and the data received from the sensor 135, the spread width can be displayed visibly in the window 163 via the electronic calculating mechanism of the display member 133.

The weighing boxes 10 indicate the weight of the hopper. These weighing boxes can indicate the quantity of material discharged from the hopper 8 per unit of time. This furnishes an indication at to the quantity of material fed to the spreading member 13 per unit of time. The indication supplied by the weighing boxes 10, the width through which the material is spread and the rate of travel of the spreader together furnish an indication as to the quantity of material spread per unit of time over a given unit of surface. The various data supplied by the weighing boxes 10 as well as those supplied by the sensor 135 as to the spread width and the rate of travel can be conveyed to the calculating unit of the display device 133 and be processed such thereby that an indication is displayed visibly in the window 164 about e.g. the number of kilogrammes spread per hectare. For the purpose of obtaining an indication as to the rate of travel, the display device is coupled via a cable 167 to a speedometer sensor 165 near the wheel 166 of the tractor 4. The sensors 127 to 131 and the display device 133 form together a measuring device.

The sensors 128 to 130 can be constructed such that the number of grains hitting same per unit of time also furnish an indication as to the quantity of material spread per unit of time via these sensors. Then, the indication produced by these sensors can be compared via the calculating unit in the display device 133 with the indication supplied by the weighing boxes 10. Thus a dual measurement is obtained for the quantity of material spread per unit of time and per unit of surface area. The display device may be adjusted such that, when the data supplied via the weighing boxes 10 and those supplied by the sensors 128 to 130 are not in agreement, the display in the window 164, e.g. relating to the number of kilogrammes spread per hectare, starts flashing and thereby provides an indication that the measurements via the two separate sources constituted by the weighing boxes 10 and the sensors 128 to 130 are not in agreement.

When the material is spread correctly over the width extending equally far to either side of the centre plane 149, the sensors 127 and 131 are located outside the spread pattern 150. For example, due to the structure of the type of material spread it may happen that the spread pattern is not in the correct position. When, for example, the spread pattern has rotated too far around the axis of rotation 14 relative to the desired position as shown in Figure 5, the material can hit either of the sensors 127 and 131. This indication may be displayed in either of the two flash lights 173 and 174, respectively, of the display device. The direction of spread is partly determined by the position of the discharge apertures 76 to 78 in the discharge member 45 and of the apertures in the members 64, 67 and 70 cooperating therewith. The discharge apertures 76 to 78 and the co-operating apertures in the further members (Figure 4) can be adjusted collectively relative to the frame and to the hopper around the axis of rotation 14 by means of the adjusting member 55. The adjusting member 55 can be operated via a control member 169 arranged at the display device. When, during operation, neither of the sensors 127 and 131 is hit by the material spread by the spreading member, the position of the spread pattern and hence of the spread width on either side of the centre plane 149 is set in the desired manner. When neither of the flash lights 173 and 174 is working, the spread pattern is positioned within the sensors 127 and 128, i.e. substantially in the desired location.

The spread width can be adjusted by the driver by means of the control member 169 which is coupled to the adjusting member 29 via a line of the line system 139. The adjustment of the adjusting member 29 can effect a rotation of the arms 27 relative to the support 28, so that the friction disc 22 can be shifted along the shaft 19, thereby influencing the rotational speed of the spreading member. In Figure 7 there are shown by means of dash-dot lines some spread patterns which can be obtained at lower numbers of revolution of the spreading member, thereby yielding smaller spread widths.

The distribution of the material over the spread pattern 150, and hence over the spread width, is influenced to advantage when the distribution of the material over the feed region to the spreading member is maintained in the appropriate manner during its movement over the spreading member to the circumference thereof through the sector 153. The material supplied to the spreading member through discharge aperture 76 will fan out thereover to some extent, as will also the material supplied thereto through the discharge apertures 77 and 78. In this situation, a greater quantity of material will flow, from the periphery of the spreading member, to the centre of the sector 153 than towards the edges thereof, the said quantity gradually decreasing towards the edges. In order to keep the distribution of the material through the spread sector 153 in agreement with the relevant chosen size of passage of the discharge apertures 76 to 78, it is advantageous for the thrower blades 32 to have edges 35 which, during operation, move along a conical plane located parallel to and near the conical plane wherein the wall sections of the members 45, 64, 67 and 70 of the discharge mechanism 73 are located. In Figure 3 is illustrated that the edges 35 of the thrower blades 32 are located parallel to and close to the wall 47 of the discharge member 45 and to the walls 66, 69 and 72. Since the edges 35 are positioned close to these walls, they can very rapidly collect the material flowing from the apertures 76 to 78 and the apertures co-operating therewith. This will keep the distribution of the material over the spreading member through the sector 153, and hence over the spread pattern 150 in an appropriate relation to the chosen size of passage of the apertures 76 to 78 and the apertures co-operating therewith, in particular in relation to the size of passage determined by the adjusting apertures of the adjusting member 64, which apertures cooperate with the apertures 76 to 78.

In the situation wherein the spreading member is located parallel to the surface area to be spread and the material is spread through a semi-circular spread pattern (Figure 7), the apertures 86, 87 and 88 of the adjusting member 64, which apertures constitute a series or group, are in co-operation with the apertures 76 to 78 of the discharge member 45.

The flow of the material from the hopper through the discharge apertures 76 to 78 and the co-operating apertures in the members 64, 67 and 70 is stimulated advantageously by the conveyor disc 59. Being connected to the axle 15, the conveyor disc 59 will rotate in the direction 33 at the same speed as the spreading member 13 during operation of the machine. In this manner the disc 59 will influence the flow of the material in dependence on the rotational speed of the spreading member. Due to the position of the discharge apertures in the wall sections which are parallel to a conical plane which diverges upwardly or in a direction away from the spreading member 13, the material can flow advantageously from the hopper to the spreading member 13 in a rapid and smooth process. This flow is also influenced by the conical structure of the conveyor disc 59. The conveyor disc 59 is shaped parallel to a conical plane which is counter to the direction wherein diverges the conical plane containing the wall 47 and hence the discharge apertures 76 to 78. An advantageous position of the wall 47 is obtained when it is at an angle of more than 30° and of less than 60° with the axis of rotation 14. Preferably, as in the embodiment shown, this angle is approximately 45°.

The slightly projecting, pointed portions 100 in the discharge apertures 76 to 78 and in the adjusting apertures 86 to 90 can influence advantageously the flow of the material through the discharge apertures 76 to 78 and the apertures co-operating therewith, in particular when the said apertures are closed to a greater or lesser extent by the doser member 67.

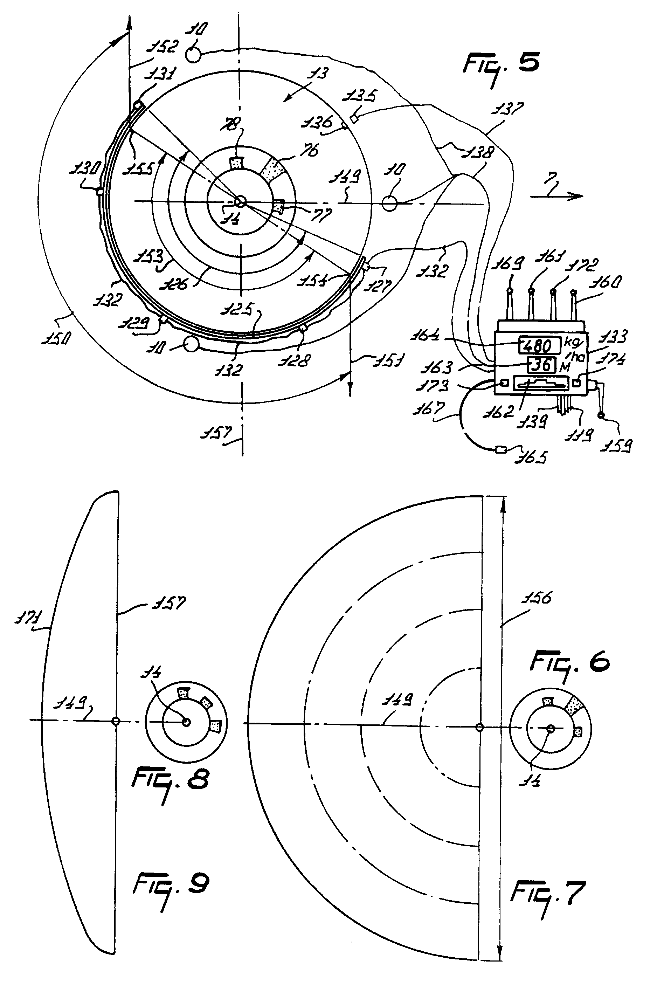

Although, when the spreading member in a position parallel to the surface area to be spread, the material can be spread advantageously in accordance with a semi-circular spread pattern as shown in Figure 7, it may be desirable in certain cases for the spreading member to assume a different position relative to the surface area to be spread. For example, it may be desirable to spread the material less far to the rear, taken in the direction of operative travel 7 and the width being the same as shown in Figure 7. This may be of importance when the machine drives up or down a slope. Also, this may be of importance for a uniform spread of the material over the head ends of the fields to be spread. For example, it is then possible for the material to be spread in accordance with a spread pattern as shown in Figure 9. In dependence on certain conditions, the distribution of the material over the spread width will then also be desired to be effected in a predetermined manner. In accordance with the inventive idea, this distribution is also controllable. The embodiment shown is again based on the wish of spreading a greater quantity of material in the centre of the width spread than towards the edges thereof, the said quantity decreasing gradually towards the edges. The spreading in accordance with the spread pattern of Figure 9 can be achieved by setting the spreading member at an obliquely downward and rearward slope relative to the surface to be spread. As a result, the material which is thrown to the rear with a component parallel to the centre plane 149 will be spread at a more oblique downward angle than in the case of the spread pattern of Figure 7. Thus, the material thrown in that direction will hit the soil at a shorter distance from the axis of rotation 14. Thus, the material can reach the soil over a spread pattern 171 as is shown in Figure 9. This spread pattern 171 results in a better distribution of the material on, for example, the head ends of the field. If one wants to spread the material through a spread pattern 171, the distribution over the spread sector 153 along the periphery of the spreading member within the spread lines 151 and 152 will have to be chosen differently. This in particular so, because the material leaving the spreading member through the centre of the spread sector 153 will be spread over a smaller width to either side of the centre plane 149. This different distribution over the circumference of the spreading member through the sector 153 can be obtained by a different distrubution of the feed of the material fed to the spreading member from the hopper through the angle 79. This is controllable by the machine in accordance with the invention via the adjusting member 64. When spreading the material in accordance with the semi-elliptical spread pattern of Figure 9, less material will have to be fed in the centre of the region where material is fed to the spreading member and more material near the edges thereof. This is in contradistinction to the case wherein the material is spread in accordance with the semi-circular spread pattern of Figure 7. In order to achieve this, the adjusting member 64 is adjusted relative to the discharge member 45 in such a manner that the apertures 91, 89 and 90 co-operate with the apertures 76 to 78. Thus, the free passage height of the aperture 76 is determined by the height 97 of the aperture 91. The height 96 of the apertures 89 and 99 then determines the size of passage of the apertures 77 and 78. In this embodiment, the heights 96 and 81 are equal to each other. As the height 97 is less than the height 96 of the apertures 89 and 90, there will be fed less material in the centre of the feed region over the sector 79 over which material is fed to the spreading member than at the ends thereof. Thus, in a corresponding manner less material will be spread in the centre of the sector 153 at the circumference of the spreading member than via the portions thereof that are located on either sides of the centre. In this situation, the sensors 128 and 130 will measure more material per unit of time than the sensor 129. This indication from the sensors 128 to 130 can be conveyed via the cable system 132 to the, e.g. electronic, calculating unit of the display device 133 which produces a visible display in the window 162. The calculating unit will then be set in such a manner that it can graphically display in the window 162 the relation between the distribution through the circumferential angle 153 of the spreading member and that over the spread width 156. Alternatively, this display may be chosen differently, e.g. as a numerical display. In this window 162 there will then be given a graphic representation which should correspond to the desired distribution of spread through the spread pattern 171. Although less material will be thrown by the spreading member in the centre of the sector 153, the distribution of the material over the spread pattern 171 will possibly be such that a distribution of the material over the spread width 156 on either side of the centre plane 149 is obtained which gradually decreases from the centre of the spread width towards the edges thereof. Thus, the material is distributed in the desired manner over the width through which the material is spread by the spreading member during travel of the machine in the direction indicated by the arrow 7. An adjustment of the adjusting member 64 relative to the discharge member 45 such that the apertures 91, 89 and 90 co-operate with the respective apertures 76 to 78 is possible via the adjusting member 118. Operation of the adjusting member 118 is possible via the control member 172 arranged at the display device 133. Thus, the adjustment of the adjusting member 64 relative to the discharge member 45 can also be effected from a distance by the driver of the tractor or another vehicle to which the machine is coupled.

The desired position of the spreading member relative to the horizontal plane, and hence relative to the surface to be spread, can easily be set via the pointer 141 amd the scale 145. For example, the scale 145 can show in degrees the rearwardly inclining position of the machine. The rearwardly inclining position can be set via the top rod 178 of the three-point lifting hitch 3 of the tractor. Alternatively, it is possible to provide the spreading member 13 capably of tilting in the frame 1 in order to achieve the desired rearwardly inclining position.

The apertures shown in the embodiment in the various members 45, 64, 67 and 70 are located next to each other in accordance with a curve that is curved concentrically around the axis of rotation 14. If so desired, the position of the apertures may also be chosen differently, e.g. in a row extending in a straight line. In the embodiment shown, the apertures 86 to 88 in the adjusting member 64 constitute one group of apertures and the apertures 89 to 91 a second group. These groups are intermingled such that at least one aperture of the one group is located between two apertures of the other group. The two or, optionally, more groups of apertures may also be arranged next to each other in their totality. This may be necessary if there is no sufficient space to position the apertures in the intermingled manner, e.g. when the width of one or more apertures and/or the spacing between the apertures is chosen differently in order to obtain a desired spread pattern. For example, for given purposes there can be preferred a spread mode wherein it is desired for the spread pattern 150 or 171 and the angle 153 through which the material is spread via the spreading member to be much smaller than in the embodiment shown. Then, the apertures 76 to 78 and apertures co-operating therewith will be provided through a smaller angle 79 or distributed differently around the axis of rotation 14. When the material is spread through a spread pattern of a different size, the position of the five sensors 127 to 131, or of a different number of sensors chosen, will be adapted to the different size. The position of the apertures, such as of the apertures 76 to 78 and apertures cooperating therewith around the axis of rotation 14, can then also be chosen differently relative to the planes 149 and 157.

Although in the embodiment shown the distribution of the material over the feed region to the spreading member is adjustable by causing either the one group of apertures 86 to 88 or the other group of apertures 89 to 91 to co-operate with the discharge apertures 76 to 78, it is alternatively possible to make this distribution adjustable by e.g. providing an adjustable slide near each of the two or more discharge apertures, by means of which the discharge apertures can optionally be closed to a greater or lesser extent. Then, these adjustable slides will be adjustable independently of each other. In the case of three discharge apertures, but there may be more if so desired, the central aperture can be closed to a greater or lesser extent than the outermost ones, so that there are set actual feed-through apertures wherethrough a greater or lesser quantity of material will be fed to the spreading member in the centre of the fed region of material than near the edges thereof.

Figure 5 shows a display device 133 having a plurality of control members by means of which the various setting members can be operated manually. This manual control can be effected in response to the indications displayed in the windows 164, 163 and 162 of the display device 133 to achieve a desired setting.

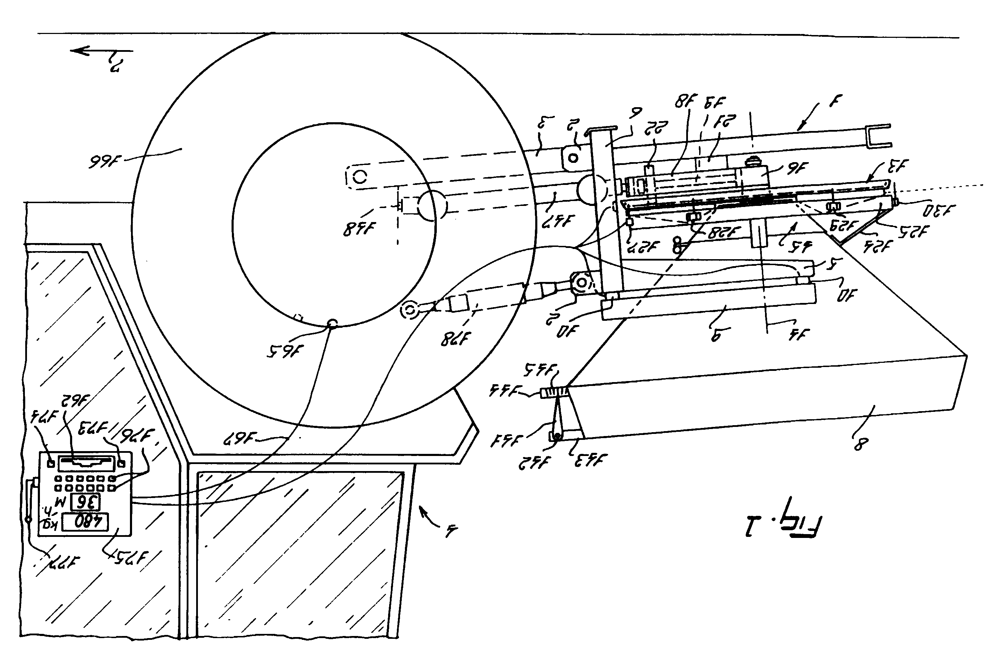

Alternatively, the display device 133 may be of such a construction that the desired settings are inputted into the display device and this display device then automatically performs the desired adjustment in case the material is not spread in the desired manner. Figure 1 shows a display device 175 by means of which the settings of the various setting members can be performed automatically once the desired setting has been inputted via a keyboard 166 in the calculating and setting mechanism of the display device 175. By means of the setting mechanism, the various setting members can then be adjusted automatically when the sensors convey to the display device 175 data which are not in agreement with the desired spread distribution. The display device 175 includes a control member 177 by means of which the adjusting member 64 can be operated manually to cause the group of apertures 86 to 88 or the group of apertures 89 to 91 to co-operate with the discharge apertures 76 to 78 in order to obtain either the semi-circular spread pattern of Figure 7 or the semi-elliptical spread pattern of Figure 9. In addition, the display device 175 has a number of windows wherein indications are given as to the quantity of material spread per hectare, as to the spread width and as to the distribution thereof, the windows being identical to those of the display device 133. Therefore, the corresponding display windows are denoted by the same reference numerals as in the display device 133. The display windows in the display device 175 receive their indications in the same way as in the previous embodiment. For that reason, this is not described in further detail. The display windows in the display device 175 give a visible indication as to how the spreading operation proceeds during operation.

The shape of the spread pattern 171 can be influenced to some extent by adjusting the spreading member 13 to a greater or lesser oblique position. The manner in which the spreading member 13 is adjusted relative to the horizontal spread surface is indicated by the pointer 141 relative to the scale 145 on the strip 144.

## Claims

1. A machine for spreading material, in particular granular and/or pulverulent material such as fertilizer, which machine comprises a frame (1), a hopper (8) and at least one spreading member (13) and a measuring device, the measuring device provides an indication of the spreading of the material by the spreading member, characterized in that the measuring device can measure the distribution of the material through the spread pattern (150) over which it is spread by the spreading member, the measuring device comprising sensors which are responsive to sound waves or light waves the measuring device being coupled with a display device and the results of the measurement can visibly display the distribution of the material over the spread pattern on the display device and wherein the indication (162) in the display device (133) is a graphical one.

2. A machine as claimed in claim 1, characterized in that the measuring device (127 to 131) provides a number of measuring members divided around at least a part of the spreading member.

3. A machine as claimed in any one of the preceding claims, characterized in that near the spreading member periphery there are arranged measuring members (127, 131), the arrangement of which being such that the said measuring members furnish an indication as to the direction of spread wherein the material is spread by the spreading member (13).

4. A machine as claimed in any one of the preceding claims, characterized in that the spreading member (13) is coupled to an adjusting mechanism (29) for optionally setting one of at least two different speeds of the spreading member, and that there is provided a measuring member (135, 136) for measuring the number of revolutions of the spreading member, the measuring results of which measuring member being conveyed to the display device, and that a calculating unit of the display device produces thereof together with other measuring data as a result a visible display (164) as to the quantity of material spread per unit of surface e.g. in kilogrammes per hectare.

5. A machine as claimed in any one of the preceding claims, characterized in that control members (160, 161, 169, 172) are arranged near the display device (133) for operating the various adjusting members, and/or that the display device includes a switching mechanism for automatically operating the various adjusting members (29, 55, 120, 121) in dependence on the desired spread and on the values supplied by the measuring members, the display device (133) including a plurality of keys (176) for setting the desired values for spreading the material to be spread, which values may relate to the distribution of the material over the spread pattern through which the material is spread and/or to the direction of spread wherein the material is spread by the spreading member and/or to the width through which the material is spread during operation and/or to the quantity of material to be spread per unit of surface.

6. A machine as claimed in any one of the preceding claims, characterized in that the distribution of the feed of material to the spread pattern (150) is adjustable to at least two different positions, so that in the one position there is fed relative more material to the centre of the spread pattern than near the two edges thereof, and in the other position there is fed relative less material to the centre of the spread pattern than near the edges thereof.

7. A machine as claimed in any one of the preceding claims, characterized in that the distribution of the material over the spread pattern (150) is adjustable by a discharge member (45) and further members (64, 67, 70) which discharge member and further member, cooperate with each other and through which the material is fed to the spreading member, the discharge member (45) and/or the further members (64, 67, 70) are adjustable relative to the position of the spreading member and/or relative to each other.

8. A machine as claimed in claim 7, characterized in that the discharge member (45) and the further members (74, 67, 70) are adjustable around the axis of rotation (14) of a rotatable spreading member (13).

9. A machine as claimed in claim 7 or 8, characterized in that the discharge member (45) is coupled with the frame by an adjusting member (55), and that one of the further members (67) is coupled to the discharge member (45), and that the further members (65, 67, 70) are coupled one to the other by adjusting members (118, 120, 121).

10. A machine as claimed in claim 7, 8 or 9, characterized in that the discharge member (45) and the further members (65, 67, 70) each are provided with a number of apertures of different size, which apertures cooperate with each other and can be adjusted relative to each other through the intermediary of the adjusting members (55, 118, 120, 121) to be able to adjust the distribution of the feed of material over the area of the spreading member to which the material is fed to the same.

11. A machine as claimed in any one of the claims 7 to 10, characterized in that at least one of the further members (67) is adjustable relative to the discharge member (45) to adjust the feed of the material to the spreading member per unit of time to a greater or lesser extent.

12. A machine as claimed in any one of the claims 7 to 11, characterized in that the discharge member (45) and the further members are located above the spreading member.

## Patentansprüche

1. Streumaschine, insbesondere für körniges und/oder pulveriges Gut wie Kunstdünger, mit einem Rahmen (1), einem Vorratsbehälter (8) und mindestens einem Streuglied (13) sowie einer Meßeinrichtung, die die Menge des von dem Streuglied ausgestreuten Gutes anzeigt,
dadurch gekennzeichnet, daß mittels der Meßeinrichtung die Verteilung des Gutes im Streubild (150) zu messen ist, in welchem es von dem Streuglied ausgestreut wird, wobei die Meßeinrichtung auf Schallwellen oder Lichtwellen ansprechende Sensoren aufweist, wobei die Meßeinrichtung mit einer Anzeigevorrichtung verbunden ist und aufgrund der Meßergebnisse die Verteilung des Gutes im Streubild auf der Anzeigevorrichtung sichtbar anzuzeigen ist, und wobei die Anzeige (162) auf der Anzeigevorrichtung (133) eine graphische Anzeige ist.

2. Maschine nach Anspruch 1,
dadurch gekennzeichnet, daß die Meßeinrichtung (127 bis 131) mit mehreren Meßelementen versehen ist, die rund um mindestens einen Teil des Streugliedes verteilt angeordnet sind.

3. Maschine nach einem der vorhergehenden Ansprüche,
dadurch gekennzeichnet, daß nahe der Peripherie des Streugliedes Meßelemente (127, 131) vorgesehen sind, deren Anordnung so getroffen ist, daß sie eine Anzeige bezüglich der Streurichtung liefern, in der das Gut von dem Streuglied (13) ausgestreut wird.

4. Maschine nach einem der vorhergehenden Ansprüche,
dadurch gekennzeichnet, daß das Streuglied (13) mit einer Stellvorrichtung (29) verbunden ist, um wahlweise eine von mindestens zwei verschiedenen Geschwindigkeiten des Streugliedes einzustellen, daß ein Meßelement (135, 136) vorgesehen ist, um die Anzahl der Umdrehungen des Streugliedes zu messen, wobei die Meßergebnisse des Meßelementes an die Anzeigevorrichtung weitergeleitet werden, und daß eine Rechnereinheit der Anzeigevorrichtung aus diesen Ergebnissen in Verbindung mit anderen Meßdaten eine sichtbare Anzeige (164) in bezug auf die ausgestreute Gutmenge pro Oberflächeneinheit beispielsweise in Kilogramm pro Hektar erstellt.

5. Maschine nach einem der vorhergehenden Ansprüche,
dadurch gekennzeichnet, daß in der Nähe der Anzeigevorrichtung (133) Steuerglieder (160, 161, 169, 172) zum Steuern der verschiedenen Stellglieder angeordnet sind, und/oder daß die Anzeigevorrichtung eine Schaltvorrichtung zur automatischen Betätigung der verschiedenen Stellglieder (29, 55, 120, 121) in Abhängigkeit von der gewünschten Streuung und den von den Meßelementen gelieferten Werten aufweist, wobei die Anzeigevorrichtung (133) mehrere Tasten (176) zum Einstellen der für das Ausstreuen des auszustreuenden Gutes gewünschten Werte hat, die beispielsweise die Verteilung des Gutes im Streubild betreffen, in welchem das Gut ausgestreut wird, und/oder die Streurichtung, in der das Gut von dem Streuglied ausgestreut wird, und/oder die Breite, in der das Gut während des Betriebs ausgestreut wird, und/oder die pro Oberflächeneinheit auszustreuende Gutmenge.

6. Maschine nach einem der vorhergehenden Ansprüche,
dadurch gekennzeichnet, daß die Verteilung der Streugutzufuhr auf das Streubild (150) in mindestens zwei Varianten einstellbar ist, so daß in der einen Variante der Mitte des Streubildes relativ mehr Gut zugeführt wird als seinen beiden Seiten und in der anderen Variante der Mitte des Streubildes relativ weniger Gut zugeführt wird als seinen beiden Seiten.

7. Maschine nach einem der vorhergehenden Ansprüche,
dadurch gekennzeichnet, daß die Verteilung des Gutes auf das Streubild (150) durch ein Auslaßteil (45) und durch weitere Teile (64, 67, 70) einzustellen ist, wobei das Auslaßteil und die weiteren Teile miteinander zusammenwirken und das Gut durch diese Teile dem Streuglied zugeführt wird, und wobei das Auslaßteil (45) und/oder die weiteren Teile (64, 67, 70) relativ zu der Position des Streugliedes und/oder relativ zueinander einstellbar sind.

8. Maschine nach Anspruch 7,
dadurch gekennzeichnet, daß das Auslaßteil (45) und die weiteren Teile (74, 67, 70) um die Drehachse (14) eines drehbaren Streugliedes (13) verstellbar sind.

9. Maschine nach Anspruch 7 oder 8,
dadurch gekennzeichnet, daß das Auslaßteil (45) mit dem Rahmen durch ein Stellglied (55) verbunden ist, daß eines der weiteren Teile (67) mit dem Auslaßteil (45) verbunden ist, und daß die weiteren Teile (65, 67, 70) miteinander durch Stellglieder (118, 120, 121) verbunden sind.

10. Maschine nach Anspruch 7, 8 oder 9,
dadurch gekennzeichnet, daß das Auslaßteil (45) und die weiteren Teile (65, 67, 70) jeweils mit mehreren unterschiedlich großen Öffnungen versehen sind, die miteinander zusammenwirken und mittels der Stellglieder (55, 118, 120, 121) relativ zueinander verstellbar sind, so daß die Verteilung des zugeführten Gutes auf den Bereich des Streugliedes, dem das Gut über diese Teile zugeführt wird, einstellbar ist.

11. Maschine nach einem der Ansprüche 7 bis 10,
dadurch gekennzeichnet, daß mindestens eines der weiteren Teile (67) relativ zu dem Auslaßteil (45) verstellbar ist, um die Zufuhr des Gutes zu dem Streuglied pro Zeiteinheit mehr oder weniger zu verstellen.

12. Maschine nach einem der Ansprüche 7 bis 11,
dadurch gekennzeichnet, daß das Auslaßteil (45) und die weiteren Teile über dem Streuglied angeordnet sind.

## Revendications

1. Machine pour épandre de la matière, en particulier de la matière granulaire et/ou pulvérulente telle que de l'engrais, laquelle machine comprend un châssis (1), une trémie (8) et au moins un organe épandeur (13) et un dispositif de mesure donnant une indication de l'épandage de la matière par l'organe épandeur, caractérisée en ce que le dispositif de mesure peut mesurer la répartition de la matière sur l'étendue du modèle d'épandage (150) sur lequel elle est épandue par l'organe épandeur, le dispositif de mesure comportant des capteurs sensibles aux ondes sonores ou lumineuses, le dispositif de mesure étant couplé à un dispositif d'affichage où les résultats de la mesure peuvent montrer visiblement la répartition de la matière sur l'étendue du modèle d'épandage, sur le dispositif d'affichage, l'indication (162) sur le dispositif d'affichage (133) étant de nature graphique.

2. Machine selon la revendication 1, caractérisée en ce que le dispositif de mesure (127 à 131) comporte un certain nombre d'organes de mesure répartis autour d'une partie au moins de l'organe épandeur.

3. Machine selon l'une quelconque des revendications précédentes, caractérisée en ce que des organes de mesure (127, 131) sont disposés près de la périphérie de l'organe épandeur, leur agencement étant tel que ces organes de mesure fournissent une indication de la direction d'épandage selon laquelle la matière est épandue par l'organe épandeur (13) .

4. Machine selon l'une quelconque des revendications précédentes, caractérisée en ce que l'organe épandeur (13) est couplé à un mécanisme de réglage (29) pour régler, au choix, une vitesse parmi au moins deux vitesses différentes de l'organe épandeur, et en ce qu'il est prévu un organe de mesure (135, 136) pour mesurer le nombre de tours de l'organe épandeur, les résultats de mesure de ces organes de mesure étant transmis au dispositif d'affichage, et en ce qu'une unité de calcul du dispositif d'affichage produit, à partir de ces résultats et d'autres données de mesure, un affichage visible (164) de la quantité de matière épandue par unité de surface, par exemple en kilogrammes par hectare.

5. Machine selon l'une quelconque des revendications précédentes, caractérisée en ce que des organes de commande (160, 161, 169, 172) sont disposés près du dispositif d'affichage (133) pour faire fonctionner les divers organes de réglage, et/ou en ce que le dispositif d'affichage comporte un mécanisme de commutation pour faire fonctionner automatiquement les divers organes de réglage (29, 55, 120, 121) en fonction de l'épandage désiré et des valeurs fournies par les organes de mesure, le dispositif d'affichage (133) comportant une pluralité de touches (176) pour régler les valeurs désirées pour l'épandage de la matière à épandre, lesquelles valeurs peuvent se rapporter à la répartition de la matière sur le modèle d'épandage sur lequel la matière est épandue et/ou à la direction d'épandage dans laquelle la matière est épandue par l'organe épandeur et/ou à la largeur sur laquelle la matière est épandue au cours du travail et/ou à la quantité de matière à épandre par unité de surface.

6. Machine selon l'une quelconque des revendications précédentes, caractérisée en ce que la répartition du débit de matière sur le modèle d'épandage (150) est réglable sur au moins deux positions différentes, de telle sorte qu'en une première position il y a un débit de matière relativement plus grand que sur le centre du modèle d'épandage que près de ses deux bords, et dans l'autre position il y a un débit de matière relativement moindre sur le centre du modèle d'épandage que près de ses bords.

7. Machine selon l'une quelconque des revendications précédentes, caractérisée en ce que la répartition de la matière sur le modèle d'épandage (150) est réglable au moyen d'un organe d'écoulement (45) et d'autres organes (64, 67, 70), lequel organe d'écoulement et autres organes coopèrent entre eux, et à travers lesquels la matière est débitée à l'organe épandeur, l'organe d'écoulement (45) et/ou les autres organes (64, 67, 70) sont réglables par rapport à la position de l'organe épandeur et/ou les uns par rapport aux autres.

8. Machine selon la revendication 7, caractérisée en ce que l'organe d'écoulement (45) et les autres organes (74, 67, 70) sont réglables autour de l'axe de rotation (14) d'un organe épandeur rotatif (13).

9. Machine selon la revendication 7 ou 8, caractérisée en ce que l'organe d'écoulement (45) est couplé au châssis par un organe de réglage (55), et en ce qu'un des autres organes (67) est couplé à l'organe d'écoulement (45), et en ce que les autres organes (65, 67, 70) sont couplés l'un à l'autre par des organes de réglage (118, 120, 121) .

10. Machine selon la revendication 7, 8, ou 9, caractérisée en ce que l'organe d'écoulement (45) et les autres organes (65, 67, 70) sont munis chacun d'un certain nombre d'ouvertures de tailles différentes, lesquelles ouvertures coopèrent entre elles et peuvent être réglées, l'une par rapport à l'autre, par l'intermédiaire des organes de réglage (55, 118, 120, 121) pour permettre d'ajuster la répartition du débit de matière sur la surface de l'organe épandeur sur laquelle la matière est débitée à cet organe.

11. Machine selon l'une quelconque des revendications 7 à 10, caractérisée en ce qu'au moins un des autres organes (67) est réglable par rapport à l'organe d'écoulement (45) pour ajuster le débit de matière à l'organe épandeur par unité de temps, dans une mesure plus ou moins grande.

12. Machine selon l'une quelconque des revendications 7 à 11, caractérisée en ce que l'organe d'écoulement (45) et les autres organes sont situés au-dessus de l'organe épandeur.
